# EUROPÄISCHE PATENTSCHRIFT

(11) **EP 3 231 327 B1**
(45) Veröffentlichungstag und Bekanntmachung des Hinweises auf die Patenterteilung: **19.09.2018**
(21) Anmeldenummer: 17163193.0
(22) Anmeldetag: 28.03.2017
(51) Int. Cl.: A47B 95/00, A47B 96/06, F16B 12/38, F16B 12/42

(54) **BEFESTIGUNGSVORRICHTUNG ZUR BEFESTIGUNG EINES AUFSETZTEILS AN EINEM MÖBELKORPUS**
ATTACHMENT DEVICE FOR ATTACHING AN ATTACHMENT PIECE TO A FURNITURE UNIT
DISPOSITIF DE FIXATION D'UN ÉLÉMENT DE RÉCEPTION SUR UN CORPS DE MEUBLE

(30) Priorität: 15.04.2016 DE 102016106975
(43) Veröffentlichungstag der Anmeldung: 18.10.2017
(73) Patentinhaber: Rennerich GmbH, 33161 Hövelhof (DE)
(72) Erfinder: Meier, Jürgen, 33161 Hövelhof (DE)
(74) Vertreter: Ostermann, Thomas

(56) Entgegenhaltungen:
- EP-A1- 1 857 017
- EP-A1- 2 792 274
- DE-A1- 2 546 364
- DE-A1- 2 557 966
- DE-U1- 29 814 399

## Beschreibung

Die Erfindung betrifft eine Befestigungsvorrichtung mit einem Befestigungselement und einem Aufsetzteil zur Befestigung des Aufsetzteils an einem Möbelkorpus nach dem Oberbegriff des Patentanspruchs 1.

Aus der DE 79 32 216 U1 ist eine Befestigungsvorrichtung zur Befestigung eines als eine Blendleiste oder eines Passstückes ausgebildeten Aufsetzteils an einem Möbelkorpus bekannt, wobei zur Befestigung ein winkelförmiges und an zwei Schenkeln mit Befestigungszapfen versehenes Befestigungselement vorgesehen ist. Der Befestigungszapfen ist rotationssymmetrisch ausgebildet und weist eine Anzahl von Widerhakenelementen auf, so dass mit axialem Eindrücken des Befestigungszapfens in eine Bohrung des Möbelkorpus' und des Aufsetzteils eine feste Verbindung zwischen denselben gewährleistet ist. Da die Befestigungszapfen an den beiden Schenkeln des Befestigungselementes angeordnet sind, wird das Aufsetzteil in zwei Montageschritten in eine Fixierstellung zu dem Möbelkorpus verbracht. Nachteilig an der bekannten Befestigungsvorrichtung ist, dass der Montageaufwand relativ groß ist.

Aus der EP 2 792 274 A1 ist eine Befestigungsvorrichtung zur Befestigung eines Aufsetzteils an einem Möbelkorpus vermittels eines mit einem Befestigungszapfen versehenen Befestigungselements bekannt. Der Befestigungszapfen verfügt über ein radial abragendes Krallenelement, so dass der Befestigungszapfen durch eine Linear- und Kippbewegung in die Fixierstellung verbracht wird. Das Befestigungselement weist auf einer dem Krallenelement abgewandten Seite einen nach oben abragenden Haltezapfen auf, der in eine Bohrung des als ein Fachboden ausgebildeten Aufsetzteils eingreifbar ist. Da sich an dem Haltezapfen eine Auflagefläche anschließt, ist der Fachboden in horizontaler Richtung fixiert. Eine vertikale Fixierung des Fachbodens an dem Befestigungselement ist nicht vorgesehen.

Aus der EP 1 857 017 A1 und der DE 25 57 966 A1 sowie der DE 25 46 364 A1 sind Befestigungsvorrichtungen zur Befestigung eines Aufsetzteils an einem Möbelkorpus mit einem Befestigungselement bekannt, wobei auf einer einem Befestigungszapfen des Befestigungselementes abgewandten Seite eine Haltefläche mit einem Haltezapfen vorgesehen ist, auf den das Aufsetzteil unter Aufstülpen einer Ausnehmung auf den Haltezapfen aufgesetzt ist. Ein vertikales Anheben des Aufsetzteils von dem Befestigungselement wird hierdurch nicht verhindert.

Aufgabe der vorliegenden Erfindung ist es, eine Befestigungsvorrichtung zur Befestigung eines Aufsetzteils an einem Möbelkorpus derart weiterzubilden, dass der Montageaufwand weiter reduziert wird, wobei insbesondere der Kraftaufwand reduziert werden soll.

Zur Lösung dieser Aufgabe weist die Erfindung die Merkmale des Patentanspruchs 1 auf.

Nach der Erfindung ist ein Befestigungselement vorgesehen, das über einen mit einem Krallenelement und mit einer Einbuchtung versehenen Befestigungszapfen verfügt. Das Krallenelement ist bezüglich einer Achse des Befestigungszapfens bzw. eines Zapfengrundkörpers desselben axial versetzt zu der Einbuchtung angeordnet, wobei das Krallenelement auf einer dem freien Ende des Zapfengrundkörpers zugewandten Seite und die Einbuchtung auf einer dem freien Ende abgewandten bzw. einem Fußbereich des Zapfengrundkörpers zugewandten Seite angeordnet ist. Vorteilhaft kann hierdurch der Befestigungszapfen durch eine kombinierte Linear-/Kippbewegung des Befestigungselementes bzw. des Befestigungszapfens in die Fixierstellung innerhalb einer Bohrung des Möbelkorpus verbracht werden. Es erfolgt eine geführte Bewegung des Befestigungszapfens innerhalb der Bohrung, wobei durch die Kippbewegung das Krallenelement mit relativ geringem Kraftaufwand in eine Wand der Bohrung eingetrieben werden kann. Der Montageaufwand kann hierdurch reduziert werden. Das Befestigungselement weist einen Aufnahmeschlitz auf, in den das Aufsetzteil eingesetzt werden kann, so dass es in der Montagestellung rastend gehalten ist. Hierzu weist der Aufnahmeschlitz des Befestigungselementes eine Klemmöffnung auf, deren Randkante von einem Federelement des Aufsetzteils hintergriffen und an der Randkante verhakt wird. Vorteilhaft kann hierdurch eine einfache und werkzeugfreie Montage des Aufsetzteils erfolgen. Wenn die Klemmausnehmung offen ausgebildet ist, kann das Federelement entriegelt werden, so dass das Aufsetzteil lösbar mit dem Möbelkorpus verbunden ist.

Nach einer bevorzugten Ausführungsform der Erfindung sind das Krallenelement und die Einbuchtung auf einer Oberseite des Befestigungszapfens angeordnet. Auf diese Weise kann das Kippen nur durch eine Drehbewegung des Befestigungselementes von oben nach unten erfolgen. Wenn das Befestigungselement in einem oberen Bereich einer Seitenwandung des Möbelkorpus angebracht wird, kann somit die Montage vereinfacht werden.

Nach einer Weiterbildung der Erfindung weist der Zapfengrundkörper auf einer dem Krallenelement gegenüberliegenden Seite eine sich zu einem freien Ende des Zapfengrundkörpers verjüngenden Flächenabschnitt auf. Der verjüngende Flächenabschnitt gleicht den durch das Krallenelement verursachten erhöhten Radius auf einer gegenüberliegenden Seite der Zapfenachse aus, so dass der Befestigungszapfen in einem ersten Montageabschnitt linear in Axialrichtung des Zapfengrundkörpers in die Bohrung einsetzbar ist, ohne dass Gegenkräfte zu überwinden wären.

Nach einer Weiterbildung der Erfindung ist ein Abstand zwischen dem verjüngenden Abschnitt des Zapfengrundkörpers und einer Einbuchtungsfläche der Einbuchtung kleiner und/oder gleich einem Durchmesser der Bohrung. Auf diese Weise ist gewährleistet, dass in einem ersten Montageschritt der Befestigungszapfen, vorzugsweise mit Spiel, mittels einer Linearbewegung teilweise in die Bohrung einsetzbar ist, ohne dass eine Gegenkraft zu überwinden ist.

Nach einer Weiterbildung der Erfindung schließt sich an den verjüngenden Flächenabschnitt ein gerader Flächenabschnitt an, der sich bis hin zu einer Basisfläche eines Grundkörpers des Befestigungselementes erstreckt. Zwischen dem verjüngenden Flächenabschnitt und dem geraden Flächenabschnitt ist ein Kipppunkt ausgebildet, der mit seinem Eingreifen in die Bohrung des Möbelkorpus zwingend zu einer Kippbewegung um eine senkrecht zu der Zapfenachse verlaufenden Drehachse führt, so dass beim weiteren Eindrücken des Befestigungszapfens das Krallenelement in die Wand der Bohrung mittels der Kippbewegung eingetrieben wird. Gegebenenfalls kann der Kippbewegung auch eine Linearbewegung überlagert sein. Die Hauptbewegungskomponente ist jedoch die Kippbewegung, da sie für das Eintreiben des Krallenelementes in die Wand der Bohrung verantwortlich ist.

Nach einer Weiterbildung der Erfindung ist beabstandet zu dem Befestigungszapfen ein Zusatzzapfen mit koaxial angeordneten Widerhakenelementen angeordnet. Von einem freien Ende des Zusatzzapfens aus gesehen befindet sich das nächstliegende Widerhakenelement in einer Höhe des Kipppunktes des Befestigungszapfens, so dass das Eingreifen des Zusatzzapfens in die entsprechende Bohrung des Möbelkorpus' erst erfolgt, wenn der Kipppunkt des Befestigungszapfens zu einer Verkippung desselben führt. Somit wird quasi erst mit der Verkippung des Befestigungszapfens der Zusatzzapfen in die entsprechende Bohrung eingetrieben, und zwar im zweiten Montageschritt des Befestigungszapfens. Im ersten Montageschritt des Befestigungszapfens befindet sich der Zusatzzapfen noch nicht in der entsprechenden für ihn vorgesehenen Bohrung. Vorteilhaft kann durch die Kippbewegung des Befestigungszapfens die für die Kippbewegung des Befestigungszapfens erforderliche Kraft mitgenutzt werden für das Eintreiben des Zusatzzapfens.

Nach einer Weiterbildung der Erfindung ist der Zusatzzapfen rotationssymmetrisch und der Befestigungszapfen nicht rotationssymmetrisch ausgebildet. Der Befestigungszapfen und der Zusatzzapfen weisen somit eine grundsätzlich andere Form auf.

Nach einer Weiterbildung der Erfindung ist der Grundkörper des Befestigungselementes quaderförmig ausgebildet mit einer aufrecht angeordneten Basisfläche, die flächig an einer Seitenwand des Möbelkorpus' anliegt. Der Möbelkorpus kann beispielsweise ein Küchenunterschrank sein, an dem obenseitig ein Spülkasten eingesetzt werden kann. Das Aufsetzteil ist in diesem Fall leistenförmig ausgebildet.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine perspektivische Darstellung eines Möbelkorpus' von vorne, in dessen oberen Bereich ein leistenförmiges Aufsetzteil mittels an gegenüberliegenden Seitenwänden des Möbelkorpus' angebrachten Befestigungselementen lagerichtig gehalten ist,
- Fig. 2: eine vergrößerte Darstellung eines Endbereichs des Aufsetzteils in einer Montagestellung,
- Fig. 3: einen Vertikalschnitt durch das Befestigungselement in der eingesteckten Montagestellung von einem Befestigungszapfen und einem Zusatzzapfen desselben in entsprechenden Bohrungen der Seitenwand des Möbelkorpus,
- Fig. 4: eine Seitenansicht des Befestigungselementes,
- Fig. 5: eine perspektivische Darstellung des Befestigungselementes von einer Seite her gesehen, an dem der Befestigungszapfen als Zusatzzapfen in einem Abstand zueinander angeordnet sind,
- Fig. 6: eine perspektivische Darstellung des Befestigungselementes von einer im Vergleich zur Figur 5 gegenüberliegenden Seite des Befestigungselementes, an der eine Klemmausnehmung ausgebildet ist,

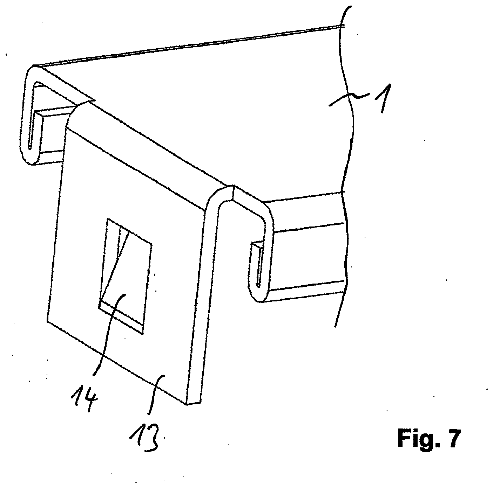

- Fig. 7: eine vergrößerte Darstellung eines stirnseitigen Endes des leistenförmigen Aufsetzteils mit einem integrierten Federelement und
- Fig. 8: eine perspektivische Darstellung eines alternativen Befestigungselementes von einer Arretierungsseite her, an der das Befestigungselement an dem Möbelkorpus befestigt wird.

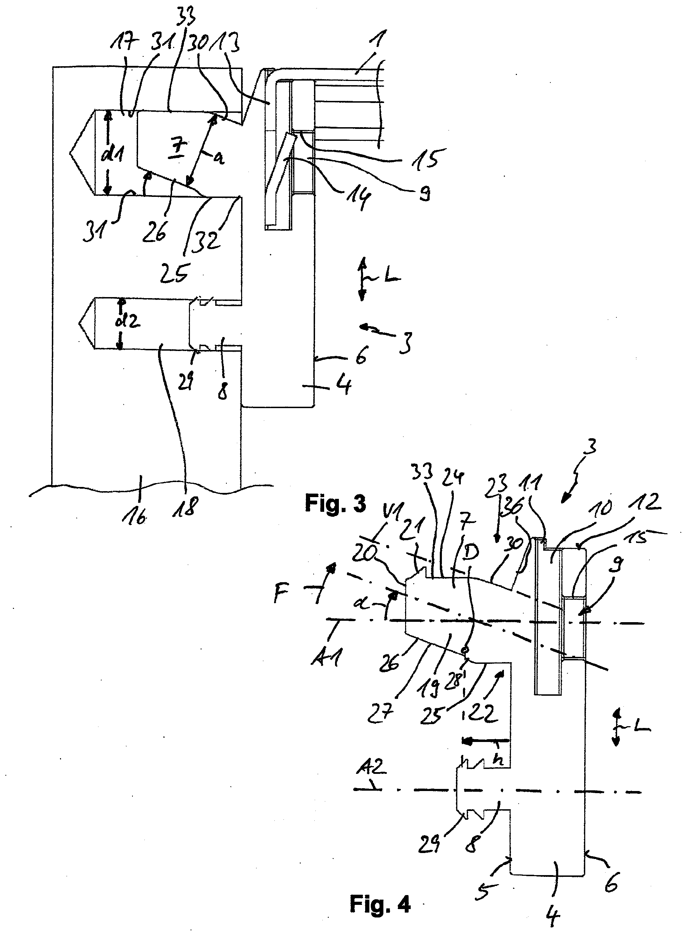

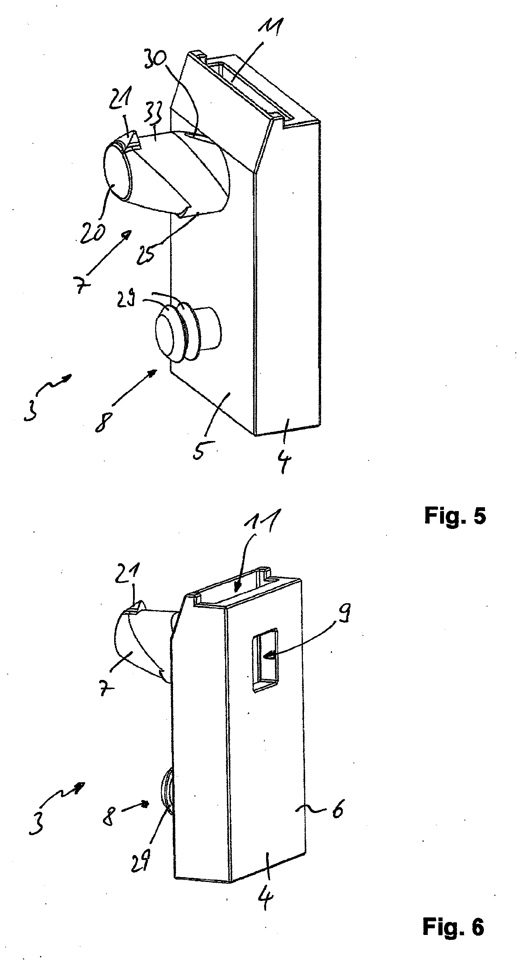

Eine Befestigungsvorrichtung zur Befestigung eines Aufsetzteils 1 an einem Möbelkorpus 2 weist im Wesentlichen ein Befestigungselement 3 nach einer ersten Ausführungsform auf, das in den Figuren 4 bis 6 näher dargestellt ist. Das Befestigungselement 3 weist einen quaderförmigen Grundkörper 4 auf, der zwei parallele Basisflächen 5 und 6 aufweist. Von einer ersten Basisfläche 5 ragt ein Befestigungszapfen 7 und ein in einem Abstand zu demselben angeordneter Zusatzzapfen 8 ab. Eine zweite Basisfläche 6 weist eine nicht erfindungsgemäße Klemmenöffnung bzw. Durchbruch 9 auf, der sich an einen Aufnahmeschlitz 10 des Grundkörpers 4 quer zur Längserstreckung des Grundkörpers 4 anschließt. Für den Aufnahmeschlitz 10 weist der Grundkörper 4 an einer Oberseite 12 desselben eine Öffnung 11 auf. Der Aufnahmeschlitz 10 weist in Längsrichtung L des Grundkörpers 4 eine solche Tiefe auf, dass ein von dem leistenförmigen Aufsetzteil 1 abgewinkeltes Ende 13 in den Aufnahmeschlitz 10 eingesetzt und unter Verrastung bzw. Arretierung eines seitlich federnden Federelementes 14 desselben an einer Randkante 15 des Klemmendurchbruchs 9 gehalten ist. Nachdem das Befestigungselement 3 an dem Möbelkorpus 2 fixiert worden ist, kann das leistenförmige Aufsetzteil 1 von oben unter Eingreifen der gegenüberliegenden stirnseitigen Enden 13 desselben in die entsprechenden Aufnahmeschlitze 10 des Befestigungselementes 3 in eine vorgegebene Montageposition gehalten werden. Der Möbelkorpus 2 kann vorzugsweise als ein Küchenunterschrank ausgebildet sein, wobei das leistenförmige Aufsetzteil 1 zur Abstützung beispielsweise eines Spülbeckens dienen kann. Dadurch, dass die zweite Basisfläche 6 zum Hintergreifen des Federelementes 14 an der Randkante 15 des Grundkörpers 4 von der zweiten Basisfläche 6 her offen ausgebildet ist, kann zum Lösen der Rastverbindung zwischen dem Aufsetzteil 1 und dem Befestigungselement 3 eine seitliche Kraft quer zur Längsrichtung L des Grundkörpers 4 auf das Federelement 14 ausgeübt werden, so dass nach Entriegelung desselben das Aufsetzteil 1 angehoben und von dem Befestigungselement 3 entfernt werden kann.

Nach einer nicht dargestellten erfindungsgemäßen Ausführungsform der Erfindung kann statt des Klemmendurchbruchs 9 lediglich eine Klemmenausnehmung an einer Innenseite des Aufnahmeschlitzes 10 angeordnet sein, der zur Verriegelung des Federelementes 14 ausreicht. In diesem Fall ist eine Lösbarkeit der Verbindung zwischen dem Aufsetzteil 1 und dem Befestigungselement 3 bzw. dem Möbelkorpus 2 nicht gegeben.

Der Befestigungszapfen 7 ist nicht rotationssymmetrisch um eine senkrecht zur Längsrichtung L bzw. zu der Basisfläche 5, 6 verlaufenden Achse A1 ausgebildet. Der Zusatzzapfen 8 ist bezüglich einer senkrecht zur Längsrichtung L bzw. der Basisfläche 5, 6 verlaufenden Achse A2 rotationssymmetrisch ausgebildet. Das Befestigungselement 3 wird vorzugsweise in einem oberen Bereich einer Seitenwand 16 angebracht. Im vorliegenden Fall weisen hierzu gegenüberliegende, aufrechte Seitenwände 16 des Möbelkorpus' 2 im oberen Bereich eine erste Bohrung 17 und eine zweite Bohrung 18 auf, die in einem gleichen Abstand zueinander angeordnet sind wie Achsen A1, A2 des Befestigungszapfen 7 des Zusatzzapfens 8. Der Befestigungszapfen 7 weist eine größere axiale Länge auf als der Zusatzzapfen 8.

Der Befestigungszapfen 7 weist einen Zapfengrundkörper 19 auf, der in einem zu einem freien Ende 20 des Befestigungszapfens 7 nahen Bereich ein Krallenelement 21 und in einem zu dem freien Ende 20 entfernt liegenden Bereich bzw. in einem Fußbereich 22 des Befestigungszapfens 7 eine Einbuchtung 23 vorsieht. Das Krallenelement 21 und die Einbuchtung 23 sind bezüglich der Achse A1 auf derselben Seite, im vorliegenden Fall auf einer Oberseite 24 des Zapfengrundkörpers 19 bzw. des Befestigungszapfens 7 angeordnet. Auf einer zu dem Krallenelement 21 und der Einbuchtung 23 gegenüberliegenden Seite des Zapfengrundkörpers 19 erstreckt sich von der ersten Basisfläche 5 aus ein gerader Flächenabschnitt 25, der parallel zu der Achse A1 des Befestigungszapfens 7 bzw. des Zapfengrundkörpers 19 verläuft. Zu dem freien Ende 20 hin gerichtet schließt sich an dem geraden Flächenabschnitt 25 ein verjüngender Flächenabschnitt 26 an, der eine abgeschrägte Fläche aufweist und zu einer Verjüngung des Befestigungszapfens 7 an einer Unterseite 27 desselben führt. An einer Verbindunglinie zwischen dem geraden Flächenabschnitt 25 und dem verjüngenden Flächenabschnitt 26 bildet sich ein Kipppunkt 28 aus, durch den eine senkrecht zur Achse A1 verlaufende Drehachse D verläuft, um die der Befestigungszapfen 7 bzw. das Befestigungselement 3 während des Einsteckens in die erste Bohrung 17 verkippt wird.

Der Zusatzzapfen 8 weist eine Mehrzahl von koaxial angeordneten Widerhakenelementen 29 auf, so dass beim linearen Einstecken des Zusatzzapfens 8 in die zweite Bohrung 18 eine kraftschlüssige Fixierung erfolgt. Zu diesem Zweck weist die zweite Bohrung 18 einen kleineren Durchmesser d2 auf als ein radialer Außenabstand der Widerhakenelemente 29.

Die Einbuchtung 23 weist eine gerade Einbuchtungsfläche 30 auf, die in einem festen Abstand a zu dem verjüngenden Flächenabschnitt 26 auf der gegenüberliegenden Seite des Befestigungszapfens 7 angeordnet ist. Dieser Abstand a ist kleiner oder gleich einem Durchmesser d1 der ersten Bohrung 17. Das Krallenelement 21 weist nicht über eine die Einbuchtungsfläche 30 fortführende gedachte Verbindungslinie V1 hinaus, so dass in einem ersten Montagschritt der Befestigungszapfen 7 unter parallelem Verlauf der Einbuchtungsfläche 30 und des verjüngenden Flächenabschnitts 26 zu einer Längswand 31 der ersten Bohrung 17 oder der Achse A1 linear eingeschoben werden kann. Während dieses ersten Montageschrittes erfolgt ohne dass eine Gegenkraft überwunden werden muss, beispielsweise mit Spiel, ein teilweises Einstecken des Befestigungszapfens 7. Auch befindet sich der Zusatzzapfen 8 noch nicht in der zweiten Bohrung 18. Erst wenn der Kipppunkt 28 an einen Öffnungsrand 32 der ersten Bohrung 17 angreift, erfolgt zu Beginn des zweiten Montageschritts eine geführte Kippbewegung bzw. Bewegung in Drehrichtung F um die senkrecht zur Achse A1 verlaufende Drehachse D, die überdies auch senkrecht zur Längsrichtung L des Grundkörpers 4 verläuft. Mit Erreichen des Kipppunktes 28 endet auch die gerade Einbuchtungsfläche 30, an der sich senkrecht zu der Einbuchtungsfläche 30 verlaufend eine Anschlagfläche 36 des Befestigungszapfens 7 anschließt. Die Anschlagfläche 36 verläuft senkrecht zu der Verbindungslinie V1 bzw. dem verjüngenden Flächenabschnitt 26. Der Befestigungszapfen 7 und damit das gesamte Befestigungselement 3 wird nun unter Verkippung des freien Endes 20 des Befestigungszapfens 7 nach oben verkippt, so dass das Krallenelement 21 in die Längswand 31 der ersten Bohrung 17 eingetrieben wird. Der Befestigungszapfen 7 wird um einen Kippwinkel α verdreht, bis er zum Abschluss des zweiten Montageschrittes in der in Figur 3 dargestellten Fixierstellung gelangt ist. In dieser Fixierstellung liegen der gerade Flächenabschnitt 25 und ein sich an das Krallenelement 21 anschließender zweiter gerader Flächenabschnitt 33, der gegenüberliegend zu dem gegenüberliegenden ersten geraden Flächenabschnitt 25 angeordnet ist, an der Längswand 31 der ersten Bohrung 17 flächig an. Im vorliegenden Ausführungsbeispiel ist der zweite gerade Flächenabschnitt 33 als oberer gerader Flächenabschnitt und der erste gerade Flächenabschnitt 25 als unterer gerader Flächenabschnitt ausgebildet. Der erste gerade Flächenabschnitt 25 und der zweite gerade Flächenabschnitt 33 verlaufen parallel zu der Achse A1 des Zapfengrundkörpers 19.

Aufgrund des Einkrallens des Krallenelementes 21 in die Längswandung 31 ist nun ein Lösen der Fixierverbindung zwischen dem Befestigungselement 3 und dem Möbelkorpus 2 nicht mehr möglich.

Wie insbesondere aus Figur 4 ersichtlich ist, weist der Zusatzzapfen 8 das dem freien Ende desselben nächstgelegene Widerhakenelement 29 in einer Höhe h zu der ersten Basisfläche 5 auf, die mit der Höhe des Kipppunktes 28 zu derselben ersten Basisfläche 5 übereinstimmt. Somit ist sichergestellt, dass ein Überwinden einer Widerstandskraft beim Einstecken des Zusatzzapfens 8 in die zweite Bohrung 18 erst erfolgen kann, wenn der Kippvorgang in Drehrichtung F des Befestigungszapfens 7 eingeleitet worden ist. Der Zusatzzapfen 8 dient im Wesentlichen als Verdrehschutz für das Befestigungselement 3.

Nach einer nicht dargestellten alternativen Ausführungsform der Erfindung können das Krallenelement 21 und die Einbuchtung 23 auch an einer Unterseite des Befestigungszapfens 7 oder seitlich desselben angeordnet sein. Dies hängt davon ab, in welche Richtung die Kippbewegung bezüglich des Möbelkorpus 2 erfolgen soll.

Sowohl der Befestigungszapfen 7 als auch der Zusatzzapfen 8 sind im Wesentlichen stiftförmig ausgebildet, wobei der Befestigungszapfen 7 eine ungleichmäßige Konturierung aufweist. Der Zusatzzapfen 8 ist nach der dargestellten Ausführungsform der Erfindung in der Fixierstellung vertikal versetzt zu dem Befestigungszapfen 7, insbesondere in vertikaler Richtung unterhalb des Befestigungszapfens 7, angeordnet. Entsprechend sind auch die Bohrungen 17, 18 zueinander vertikal versetzt und/oder in einem Abstand untereinander, insbesondere die zweite Bohrung 18 in vertikaler Richtung unterhalb der ersten Bohrung 17, angeordnet. Nach einer nicht dargestellten Ausführungsform können der Befestigungszapfen 7 und der Zusatzzapfen 8 in der Justier- und/oder Montagestellung auch horizontal versetzt zueinander angeordnet sein. Entsprechend sind auch die Bohrungen 17, 18 zueinander horizontal versetzt bzw. in einem Abstand nebeneinander angeordnet. In beiden Ausführungen wird das Aufsetzteil 1 von oben in den Aufnahmeschlitz 10 eingesetzt und verrastet.

Das Befestigungselement 3 kann beispielsweise als ein einstückiges Kunststoffteil ausgebildet sein. Der Möbelkorpus 2 kann aus einem Holzmaterial, insbesondere als Spanplatten, ausgebildet sein. Das Aufsetzteil 1 ist vorzugsweise aus einem Stahlmaterial hergestellt.

Das Krallenelement 21 ist vorzugsweise starr ausgebildet. Die Widerhakenelemente 29 können starr oder flexibel ausgebildet sein.

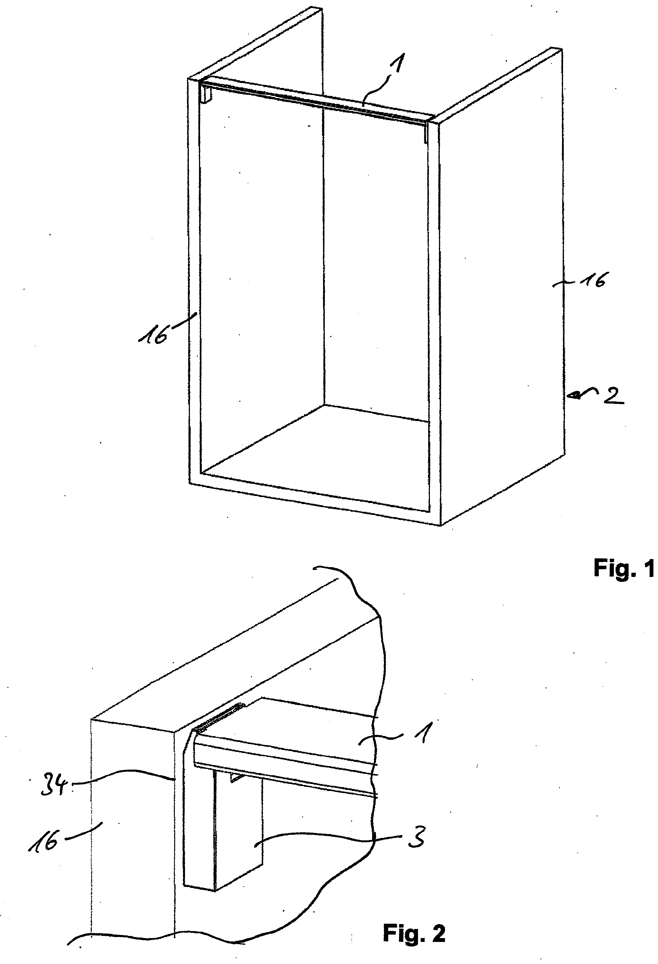

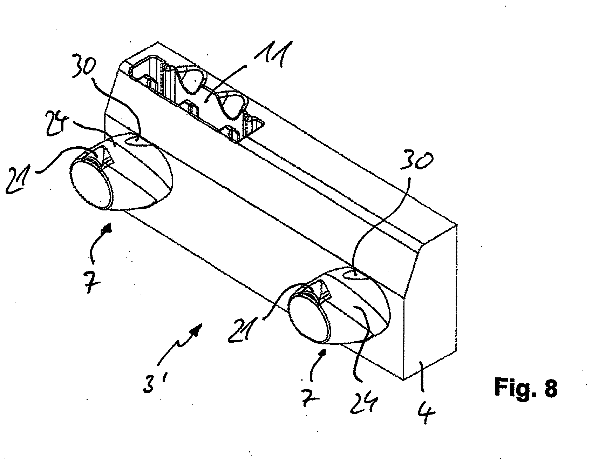

Nach einer weiteren Ausführungsform der Erfindung gemäß Figur 8 ist ein Befestigungselement 3' vorgesehen, das sich von dem Befestigungselement 3 der ersten Ausführungsform im Wesentlichen dadurch unterscheidet, dass es zwei Befestigungszapfen 7 aufweist, die in einem Abstand zueinander angeordnet sind. Der Zusatzzapfen 8 gemäß erster Ausführungsform wurde somit ersetzt durch einen weiteren Befestigungszapfen 7, wobei in der Montageposition des Befestigungselementes 3' die Befestigungszapfen 7 in einer gemeinsamen horizontalen Ebene angeordnet sind. In der Montageposition sind die beiden Befestigungszapfen 7 somit horizontal versetzt zueinander angeordnet, wobei das Krallenelement 21 derselben jeweils auf der Oberseite 24 derselben angeordnet sind. Die gleich ausgebildeten Befestigungszapfen 7 bewirken ein einfacheres Montieren, da die Montage mittels einer doppelten Linear- und Kippbewegung erfolgt. Es versteht sich, dass die Bohrungen 17, 18 des Möbelkorpus 2 in der gleichen Höhe bzw. in einem horizontalen Abstand zueinander angeordnet sind. In Figur 8 ist lediglich eine einzige Öffnung 11 an der Oberseite des Befestigungselementes 3' ausgebildet. Wenn auch dem anderen Befestigungszapfen 7 des Befestigungselementes 3' eine Öffnung 11 zugeordnet ist, in die das Aufsetzteil 1 mit seinem Ende einklipsbar ist, kann das Befestigungselement 3' sowohl in einem vorderen als auch in einem hinteren Bereich des Möbelkorpus 2 montiert werden, wobei der Monteur das Aufsetzteil 1 jeweils in einem zu einer vertikalen Kante 34 der Seitenwand 6 nahen Bereichs anordnen kann, wie beispielsweise in Figur 2 dargestellt. Das Aufsetzteil 1, das als eine Verbindungsstrebe bzw. Verbindungsleiste ausgebildet sein kann, kann somit nicht nur im vorderen Bereich des Möbelkorpus' 2, wie in Figur 1 dargestellt, sondern auch in einem hinteren Bereich desselben kantennah montiert werden.

Das Befestigungselement 3' ist - wie das Befestigungselement 3 - quaderförmig ausgebildet, wobei es in der Montageposition in Horizontalrichtung langgestreckt angeordnet ist. Vorzugsweise sind den Öffnungen 11 jeweils auf einer dem Befestigungszapfen 7 gegenüberliegenden Seite Klemmdurchbrüche 9 zugeordnet, wie es nach der ersten Ausführungsform der Erfindung vorgesehen ist.

Es versteht sich, dass die vorstehend genannten Merkmale je für sich oder zu mehreren in beliebiger Kombination Verwendung finden können. Das beschriebene Ausführungsbeispiel ist nicht als abschließende Aufzählung zu verstehen, sondern hat vielmehr beispielhaften Charakter für die Schilderung der durch die Patentansprüche definierten Erfindung.

## Patentansprüche

1. Befestigungsvorrichtung mit einem Befestigungselement (3) und einem Aufsetzteil (1) zur Befestigung des Aufsetzteils (1) an einem Möbelkorpus (2), insbesondere an einem Küchenunterschrank, wobei das Aufsetzteil (1) über ein mit einem Befestigungszapfen (7) versehenes Befestigungselement (3) an dem Möbelkorpus (2) fixierbar ist, so dass in einer Fixierstellung des Aufsetzteils (1) an dem Möbelkorpus (2) der Befestigungszapfen (7) in einer Bohrung (17) des Möbelkorpus' (2) einsteckbar ist, wobei der Befestigungszapfen (7) ein von einem Zapfengrundkörper (19) radial abragendes Krallenelement (21) aufweist, das in der Fixierstellung in eine Längswand (31) der Bohrung (17) eingreift, und wobei der Zapfengrundkörper (19) in einem Fußbereich (22) desselben eine axial versetzt zu dem Krallenelement (21) angeordnete Einbuchtung (23) aufweist, so dass der Befestigungszapfen (7) durch eine Linear- und Kippbewegung in die Fixierstellung verbracht wird, **dadurch gekennzeichnet, dass** der Grundkörper (4) des Befestigungselementes (3) an einer Oberseite einen Aufnahmeschlitz (10) aufweist zum Einsetzen eines Endes (13) des Aufsetzteils (1) und dass benachbart zu dem Aufnahmeschlitz (10) eine Klemmausnehmung (9) angeordnet ist, an deren Randkante (15) ein als Federelement (14) ausgebildetes Ende des Aufsetzteils (1) in der Fixierstellung verhakt ist.

2. Befestigungsvorrichtung nach Anspruch 1, **dadurch gekennzeichnet, dass** das Krallenelement (21) und die Einbuchtung (23) auf einer Oberseite (24) des Befestigungszapfens (7) angeordnet sind.

3. Befestigungsvorrichtung nach Anspruch 1 oder 2, **dadurch gekennzeichnet, dass** der Zapfengrundkörper (19) auf einer dem Krallenelement (21) gegenüberliegenden Seite eine sich zu einem freien Ende (20) des Zapfengrundkörpers (19) verjüngenden Flächenabschnitt (26) aufweist.

4. Befestigungsvorrichtung nach einem der Ansprüche 1 bis 3, **dadurch gekennzeichnet, dass** ein Abstand (a) zwischen dem verjüngenden Flächenabschnitt (26) und einer Einbuchtungsfläche (30) der Einbuchtung (23) kleiner und/oder gleich ist zu einem Durchmesser (d) der Bohrung (17).

5. Befestigungsvorrichtung nach einem der Ansprüche 1 bis 4, **dadurch gekennzeichnet, dass** sich an dem verjüngenden Abschnitt (26) über ein Kipppunkt (28) ein axial gerichteter gerader Flächenabschnitt (25) anschließt, der bis zu einer Basisfläche (5) eines Grundkörpers (4) des Befestigungselementes (3) verläuft.

6. Befestigungsvorrichtung nach einem der Ansprüche 1 bis 5, **dadurch gekennzeichnet, dass** beabstandet zu dem Befestigungszapfen (7) ein Zusatzzapfen (8) mit mindestens einem koaxial angeordneten Widerhakenelement (29) vorgesehen ist, wobei ein dem freien Ende des Zusatzzapfens (8) zugeordnetes Widerhakenelement (29) in Höhe (h) des Kipppunktes (28) des Befestigungszapfens (7) angeordnet ist.

7. Befestigungsvorrichtung nach einem der Ansprüche 1 bis 6, **dadurch gekennzeichnet, dass** der Zusatzzapfen (8) rotationssymmetrisch und der Befestigungszapfen (7) nicht rotationssymmetrisch ausgebildet sind.

8. Befestigungsvorrichtung nach einem der Ansprüche 1 bis 7, **dadurch gekennzeichnet, dass** der Grundkörper (4) des Befestigungselementes (3) quaderförmig ausgebildet ist mit einer Basisfläche (5), die flächig an einer Seitenwand (16) des Möbelkorpus (2) anliegt.

9. Befestigungsvorrichtung nach einem der Ansprüche 1 bis 8, **dadurch gekennzeichnet, dass** das Aufsetzteil (1) leistenförmige ausgebildet ist, wobei an stirnseitig des Aufsetzteils (1) angeordneten Enden (13) jeweils das Federelement (14) angeordnet ist.

## Claims

1. An attachment device including an attachment element (3) and an attachment piece (1) for attaching the attachment piece (1) to a furniture unit (2), in particular to a kitchen base unit, wherein the attachment piece (1) can be fixed to the furniture unit (2) by means of an attachment element (3) equipped with an attachment peg (7), such that, in a fixing position of the attachment piece (1) to the furniture unit (2), the attachment peg (7) can be inserted in a bore (17) of the furniture unit (2), wherein
the attachment peg (7) has a claw member (21) which protrudes radially from a peg base body (19) and, in the fixing position, engages in a longitudinal wall (31) of the bore (17), and wherein
the peg base body (19) has, in a bottom region (22) of the same, an indentation (23) which is arranged axially offset from the claw member (21), such that the attachment peg (7) is brought into the fixing position by means of a linear and tilting movement, **characterised in that** the base body (4) of the attachment element (3) has, on an upper side, a receiving slot (10) for introducing one end (13) of the attachment piece (1), and **in that** a clamping recess (9) is arranged adjacent to the receiving slot (10), on the marginal edge (15) of which clamping recess one end of the attachment piece (1), which is configured as a spring element (14), is hooked in the fixing position.

2. The attachment device according to Claim 1, **characterised in that** the claw member (21) and the indentation (23) are arranged on an upper side (24) of the attachment peg (7).

3. The attachment device according to Claim 1 or 2, **characterised in that** the peg base body (19) has, on a side opposite the claw member (21), a surface portion (26) which tapers towards a free end (20) of the peg base body (19).

4. The attachment device according to any one of Claims 1 to 3, **characterised in that** a distance (a) between the tapering surface portion (26) and an indentation surface (30) of the indentation (23) is smaller than and/or equal to a diameter (d) of the bore (17).

5. The attachment device according to any one of Claims 1 to 4, **characterised in that** an axially oriented straight surface portion (25) joins the tapering portion (26) by means of a tilting point (28), said surface portion extending to a base surface (5) of a base body (4) of the attachment element (3).

6. The attachment device according to any one of Claims 1 to 5, **characterised in that** an additional peg (8) having at least one coaxially arranged catch element (29) is provided at a distance from the attachment peg (7), wherein a catch element (29) assigned to the free end of the additional peg (8) is arranged at the height (h) of the tilting point (28) of the attachment peg (7).

7. The attachment device according to any one of Claims 1 to 6, **characterised in that** the additional peg (8) is rotationally symmetrical and the attachment peg (7) is not rotationally symmetrical.

8. The attachment device according to any one of Claims 1 to 7, **characterised in that** the base body (4) of the attachment element (3) is configured in the form of a cuboid having a base surface (5) which rests flat against a side wall (16) of the furniture unit (2).

9. The attachment device according to any one of Claims 1 to 8, **characterised in that** the attachment piece (1) is configured in the form of a strip, wherein the spring element (14) is arranged in each case on ends (13) arranged on the end faces of the attachment piece (1).

## Revendications

1. Dispositif de fixation avec un élément de fixation (3) et un élément de réception (1), lequel dispositif est destiné à fixer l'élément de réception (1) sur un corps de meuble (2), en particulier sur une armoire de cuisine, sachant que l'élément de réception (1) peut être fixé sur le corps de meuble (2) par l'intermédiaire de l'élément de fixation (3), qui est pourvu d'un téton de fixation (7) de manière à ce que, dans une position de fixation de l'élément de réception (1) sur le corps de meuble (2), le téton de fixation (7) puisse être inséré dans un alésage (17) du corps de meuble (2), sachant que le téton de fixation (7) présente un élément en forme de griffe (21) en saillie radiale d'un corps de base de téton (19), qui, dans une position de fixation, s'engage dans une paroi longitudinale (31) de l'alésage (17), et sachant que le corps de base de téton (19), dans une section de pied (21) de celui-ci, présente une cavité, qui est disposée, en décalage axial par rapport à l'élément en forme de griffe (21), de manière à ce que le téton de fixation (7) soit amené dans la position de fixation par un mouvement linéaire et basculant, **caractérisé en ce que**
le corps de base (4) de l'élément de fixation (3) présente, sur une face supérieure, une fente de réception (10), qui est destinée à l'insertion d'une extrémité (13) de l'élément de réception (1), et que, avoisinant à la fente de réception (10), est disposé un réceptacle de serrage (9), sur le bord (15) duquel une extrémité de l'élément de réception (1), laquelle est conçue en forme d'élément faisant ressort (14), est accrochée dans la position de fixation.

2. Dispositif selon la revendication 1, **caractérisé en ce que** l'élément en forme de griffe (21) et la cavité (23) sont disposés sur une face supérieure (24) du téton de fixation (7).

3. Dispositif selon revendication 1 ou 2, **caractérisé en ce que** le corps de base de téton (19) présente, sur un côté opposé à l'élément en forme de griffe (21), une section de surface (26), qui s'amincit vers une extrémité libre (20) du corps de base de téton (19).

4. Dispositif selon l'une des revendications 1 à 3, **caractérisé en ce que** l'intervalle (a) entre la section de surface amincie (26) et une surface en creux (30) de la cavité (23) est inférieur et / ou égal à un diamètre (d) de l'alésage (17).

5. Dispositif selon l'une des revendications 1 à 4, **caractérisé en ce que**, à la section de surface amincie (26), se raccorde une section de surface droite (25), orientée axialement, qui s'étend jusqu'à une surface de base (5) d'un corps de base (4) de l'élément de fixation (3).

6. Dispositif selon l'une des revendications 1 à 5, **caractérisé en ce que**, distancé du téton de fixation (7), est prévu un téton supplémentaire (8), qui est pourvu d'au moins un élément crochu (29), sachant qu'un élément crochu (29), associé à l'extrémité libre du téton supplémentaire (8), est disposé à la hauteur du point de basculement (28) du téton de fixation (7).

7. Dispositif selon l'une des revendications 1 à 6, **caractérisé en ce que** le téton supplémentaire (8) est de conception symétrique en rotation et que le téton de fixation (7) est de conception non symétrique en rotation.

8. Dispositif selon l'une des revendications 1 à 7, **caractérisé en ce que** le corps de base (4) de l'élément de fixation (3) est réalisé en forme de quadrilatère, avec une surface de base (5) qui porte à plat contre une paroi latérale (16) du corps de meuble (2).

9. Dispositif selon l'une des revendications 1 à 8, **caractérisé en ce que** l'élément de réception (1) est réalisé en forme de liteaux, sachant qu'à chacune des extrémités (13), disposées sur des côtés (16) de l'élément de réception (1), est agencé un élément faisant ressort (14).
